# EUROPEAN PATENT SPECIFICATION

(11) **EP 3 312 775 B1**
(45) Date of publication and mention of the grant of the patent: **16.12.2020**
(21) Application number: 16811439.5
(22) Date of filing: 01.06.2016
(51) Int. Cl.: G06N 3/00, G06N 3/02

(54) **CONTROL SYSTEM, SYSTEM, AND PROGRAM**
STEUERUNGSVORRICHTUNG, -VERFAHREN UND -PROGRAMM
SYSTÈME DE COMMANDE, SYSTÈME, ET PROGRAMME

(30) Priority: 17.06.2015 JP 2015122406
(43) Date of publication of application: 25.04.2018
(73) Proprietor: SoftBank Robotics Corp., Tokyo 105-7309 (JP)
(72) Inventor: SON, Masayoshi, Tokyo 105-7309 (JP); TOMONAGA, Kosuke, Tokyo 105-7309 (JP)
(74) Representative: Michalski Hüttermann & Partner Patentanwälte mbB
(86) International application number: PCT/JP2016/066311
(87) International publication number: WO 2016/203964

(56) References cited:
- EP-A2- 1 083 490
- JP-A- 2003 202 892
- JP-A- 2005 348 872
- JP-A- 2016 012 914
- KR-A- 20040 014 123
- US-B1- 6 219 657
- JIJUN WANG ET AL: "A Study on Emotion Classification of Image Based on BP Neural Network", INFORMATION SCIENCE AND MANAGEMENT ENGINEERING (ISME), 2010 INTERNATIONAL CONFERENCE OF, IEEE, PISCATAWAY, NJ, USA, 7 August 2010 (2010-08-07), pages 100-104, XP031754733, ISBN: 978-1-4244-7669-5

## Description

### BACKGROUND

### 1. TECHNICAL FIELD

The present invention relates to a control system, system and program.

### 2. RELATED ART

A terminal that studies conversations between a user and another person the user is talking to and accumulates, in a reply table, replies from the other person to questions from the user has been known (please see Patent Document 1, for example). Also, an emotion generating apparatus including a neural net that receives an input of user information, equipment information and a current emotional state of a user him/herself to output a next emotional state has been known (please see Patent Document 2, for example). Also, a technique to store spatiotemporal patterns in an associative memory including a plurality of electronic neurons having a layer neural net relation having directive artificial synapse connectivity has been known (please see Patent Document 3, for example).

### [Prior Art Documents]

[Patent Document 1] Japanese Patent Application Publication No. 2011-253389
[Patent Document 2] Japanese Patent Application Publication No. H10-254592
[Patent Document 3] Japanese Translation of PCT International Patent Application No. 2013-535067

US 6 219 657 B1 (2001-04-17) shows a control system comprising:a recording information generating unit that processes at least part of information detected continuously by a sensor and generates one of information in a first recording format and information in a second recording format having a larger amount of information than that of the information in the first recording format;a recording control unit that causes information generated by the recording information generating unit to be recorded; an emotion determining unit that determines intensity of an emotion at the control system based on at least part of information detected by the sensor; and that the emotion determining unit determines the intensity of the emotion using a neural network based on at least part of information detected by the sensor, a plurality of artificial neurons constituting the neural network includes an emotion artificial neuron which is an artificial neuron for which a current emotion is defined, and the emotion determining unit determines intensity of an emotion in the control system based on an internal state of the emotion artificial neuron.

There has been a drawback that it is in some cases not possible to record data appropriately according to increase in the intensity of an emotion.

### SUMMARY

The invention is defined by the features of the independent claims. Preferred embodiments are defined by the features of the dependent claims.

A first aspect provides a control system including: a recording information generating unit that processes at least part of information detected continuously by a sensor and generates information in a first recording format or information in a second recording format having a larger amount of information than that of the information in the first recording format; a recording control unit that causes information generated by the recording information generating unit to be recorded; an emotion determining unit that determines intensity of an emotion at the control system based on at least part of information detected by the sensor; and a switching control unit that switches a recording format of information which the recording control unit causes to be recorded from the first recording format to the second recording format in response to increase in intensity of an emotion determined by the emotion determining unit if the recording information generating unit is being caused to generate the information in the first recording format.

The emotion determining unit may determine the intensity of the emotion using a neural network based on at least part of information detected by the sensor.

A plurality of artificial neurons constituting the neural network may include an emotion artificial neuron which is an artificial neuron for which a current emotion is defined, and the emotion determining unit may determine intensity of an emotion in the control system based on an internal state of the emotion artificial neuron.

A plurality of artificial neurons constituting the neural network may include an endocrine artificial neuron which is an artificial neuron for which a state of generation of an endocrine substance is defined, and the emotion determining unit may determine intensity of an emotion in the control system based on an internal state of the endocrine artificial neuron.

The sensor may include an image sensor that captures images of a photographic subject continuously, the information in the first recording format may include shape data expressing a shape of an object an image of which is captured by the image sensor, and the information in the second recording format may include moving image data which has a larger amount of information than that of shape data and is based on an output of the image sensor.

A second recording information acquiring unit that acquires the information in the second recording format recorded by the recording control unit and including the moving image data; and a video generating unit that generates a video to be presented to a user based on the moving image data included in the information in the second recording format acquired by the second recording information acquiring unit may be further included.

The recording control unit may cause information generated by the recording information generating unit to be transmitted to an external server and cause the server to record the information.

A second aspect provides a system including: the above-mentioned control system; and the server.

A third aspect provides a program that causes a computer to function as the above-mentioned control system.

The summary clause does not necessarily describe all necessary features of the embodiments of the present invention.

### BRIEF DESCRIPTION OF THE DRAWINGS

FIG. 1 schematically shows one example of a system 20.
FIG. 2 schematically shows block configurations of a server 200 and a robot 40.
FIG. 3 schematically shows a neural network 300.
FIG. 4 schematically shows parameters of a neural network in a table format.
FIG. 5 schematically shows an operation flow of the server 200 performed when the robot 40 is activated or reset.
FIG. 6 is a figure for schematically explaining calculation of a coefficient of connection of an artificial synapse.
FIG. 7 schematically shows time evolution of a coefficient of connection in a case where a function hₜ^{ij} is defined as an increase-decrease parameter of the coefficient of connection.
FIG. 8 schematically shows time evolution of a coefficient of connection observed when simultaneous firing occurs further at a clock time t2.
FIG. 9 schematically shows influence definition information defining chemical influence on parameters.
FIG. 10 shows a flowchart about calculation of an internal state and a status.
FIG. 11 is a figure for schematically explaining an example about calculation of an internal state in a case where an artificial neuron does not fire.
FIG. 12 is a figure for schematically explaining an example about calculation of an output in a case where an artificial neuron fires.
FIG. 13 schematically shows time evolution of a coefficient of connection in a case where a function is defined as an increase-decrease parameter of an artificial neuron.
FIG. 14 shows, in a table format, one example of a rule 1400 stored in a recording format switching rule 290.

### DESCRIPTION OF EXAMPLES

Hereinafter, (some) example(s) will be described.

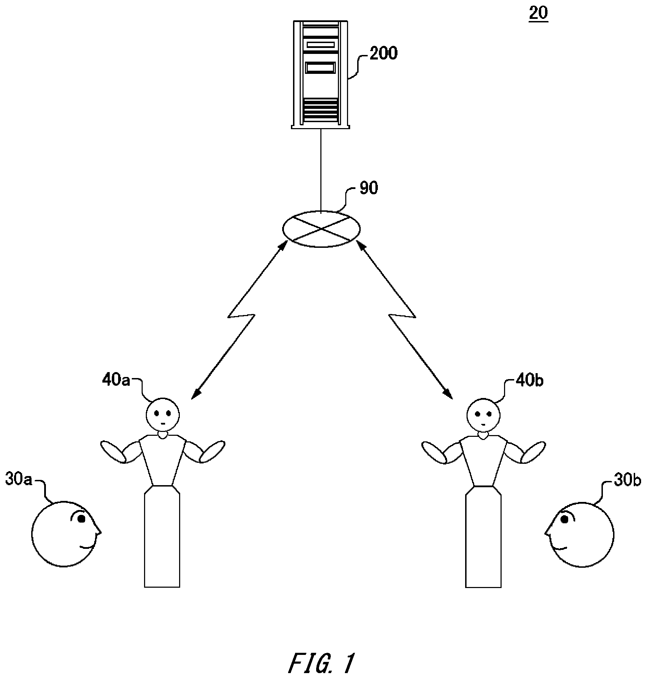

FIG. 1 schematically shows one example of a system 20. The system 20 includes a server 200, and a robot 40a and a robot 40b. The robot 40a and robot 40b communicate with the server 200 through a communication network 90 to exchange information.

A user 30a is a user of the robot 40a. A user 30b is a user of the robot 40b. The robot 40b has approximately identical functions as those of the robot 40a. Therefore, the system 20 is explained, referring to the robot 40a and the robot 40b collectively as a robot 40.

The robot 40 performs various types of operation according to situations, including moving the head or limbs according to situations, having a conversation with a user 30, providing a video to a user 30, and so on. At this time, the robot 40 determines an operation in cooperation with the server 200. For example, the robot 40 transmits, to the server 200, detection information such as a facial image of a user 30 acquired by means of a camera function, or sound or voice of a user 30 acquired by means of a microphone function. The server 200 analyzes the detection information received from the robot 40, determines an operation to be performed by the robot 40, and transmits, to the robot 40, operation information representing the determined operation. The robot 40 performs the operation according to the operation information received from the server 200.

The robot 40 has emotion values representing emotions of itself. For example, the robot 40 has emotion values representing intensities of respective emotions such as "pleased", "fun", "sad", "scared" or "excited". Emotion values of the robot 40 are determined by the server 200. The server 200 causes the robot 40 to perform an operation corresponding to a determined emotion. For example, if the robot 40 has a conversation with a user 30 when an emotion value of excitation is high, the server 200 causes the robot 40 to utter at a rapid pace. In this manner, the robot 40 can express its emotion through its actions or the like.

Based on detection information received from the robot 40, the server 200 uses a neural network to update the current state of the robot 40. The state of the robot 40 includes emotions of the robot 40. Accordingly, the server 200 uses the neural network to determine the emotions of the robot 40.

Also, the robot 40 causes the server 200 to record video data of a user 30 acquired by means of a camera function, or the like. The robot 40, as necessary, acquires the video data or the like from the server 200 and provides it to a user 30. The amount of information of video data that is generated by the robot 40 and that the robot 40 causes the server 200 to record increases as the intensity of an emotion becomes higher. For example, if recording information in a high compression format such as skeletal data, the robot 40 switches to recording of information in a low compression format such as HD moving images in response to an emotion value of excitation exceeding a threshold. According to the system 20, high definition video data generated if an emotion of the robot 40 becomes intensified can be kept as a record.

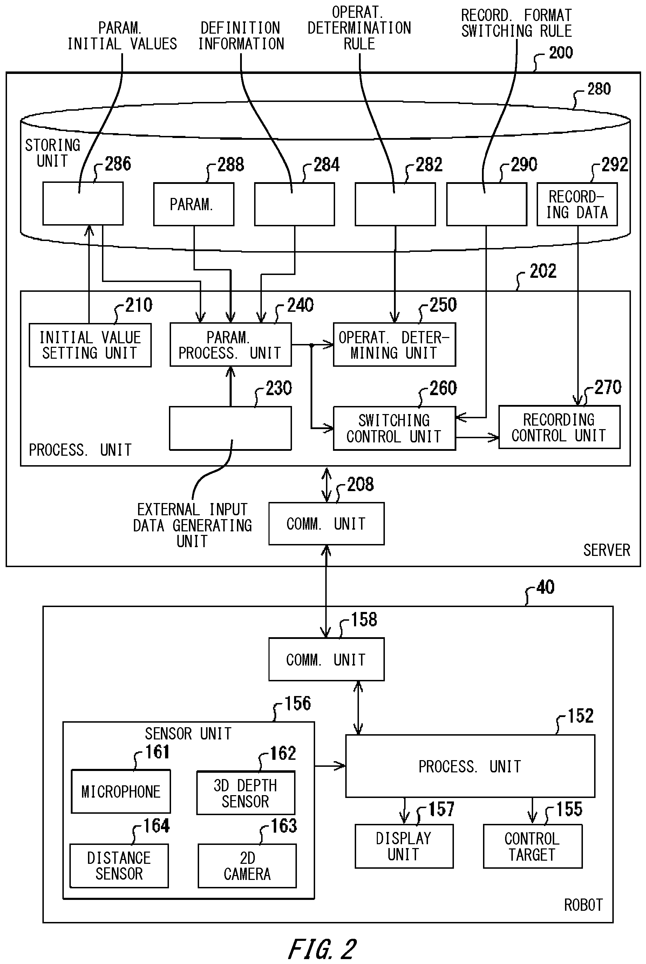

FIG. 2 schematically shows block configurations of the server 200 and the robot 40. The robot 40b has a sensor unit 156, a processing unit 152, a control target 155, a communicating unit 158 and a display unit 157. The server 200 has a processing unit 202, a storing unit 280 and a communicating unit 208. The processing unit 202 includes an initial value setting unit 210, an external input data generating unit 230, a parameter processing unit 240, an operation determining unit 250, a switching control unit 260 and a recording control unit 270. The storing unit 280 stores an operation determination rule 282, definition information 284, parameter initial values 286, latest parameters 288, a recording format switching rule 290 and recording data 292.

In the robot 40, the sensor unit 156 has sensors such as a microphone 161, a 2D camera 163, a 3D depth sensor 162 or a distance sensor 164. The respective sensors provided to the sensor unit 156 detect information continuously. Sensor information detected by the sensor unit 156 is output to the processing unit 152. The 2D camera 163 is one example of an image sensor that captures images of objects continuously, and captures images using visible light and generates video information. The 3D depth sensor 162 emits infrared ray patterns continuously, and analyzes infrared ray patterns from infrared ray images captured by an infrared camera continuously, thereby detecting the outlines of objects. Note that other than the above-mentioned ones, the sensor unit 156 may include various sensors such as a clock, a gyro sensor, a touch sensor, a sensor for motor feedback, a sensor to detect the remaining capacity of a battery.

The processing unit 152 is formed of a processor such as a CPU. The processing unit 152 causes sensor information detected continuously by the respective sensors provided to the sensor unit 156 to be transmitted to the server 200 through the communicating unit 158. Also, the processing unit 152 processes at least part of sensor information detected continuously by the respective sensors provided to the sensor unit 156, and generates information for recording. The processing unit 152 generates first recording format information or second recording format information having an amount of information larger than that of the first recording format information. The first recording format information means, for example, information in a high compression format, and the second recording format information means, for example, information in a low compression format. For example, based on skeletal information detected continuously by the 3D depth sensor 162, the processing unit 152 generates, as first recording format information, shape data such as skeletal data of an object. Also, based on video information captured by the 2D camera 163 and audio information detected by the microphone 161, the processing unit 152 generates full HD video data and audio data. Full HD video data is one example of moving image data having more information than that of shape data of an object.

The communicating unit 158 transmits, to the server 200, first recording format information or second recording format information generated by the processing unit 152. At the server 200, the recording control unit 270 stores, in the recording data 292, the first recording format information or second recording format information received by the communicating unit 208 from the robot 40. The recording control unit 270 stores, in the recording data 292, information received from each robot 40, in association with information discriminating each of the robots 40.

Also, at the robot 40, the communicating unit 158 acquires, from the server 200, information stored in the recording data 292. The communicating unit 158 functions as a recording information receiving unit that acquires second recording format information including moving image data recorded by the recording control unit 270. Based on the moving image data included in the second recording format information received by the communicating unit 158, the processing unit 152 generates a video presented to a user 30. The processing unit 152 functions as a video generating unit that generates a video to be presented to a user 30.

Also, the communicating unit 158 receives operation information indicating an operation detail from the server 200. The processing unit 152 controls the control target 155 based on the operation detail received by the communicating unit 158. The control target 155 includes a speaker, motors that drive respective units of the robot 40 such as limbs, a light emitting device, and the like. If having received information indicating an utterance content from the server 200, the processing unit 152 causes a sound or voice to be output from a speaker according to the received utterance content. Also, the processing unit 152 can control some of actions of the robot 40 by controlling drive motors of limbs. Also, the processing unit 152 can express some of emotions of the robot 40 by controlling these motors.

At the server 200, the communicating unit 208 outputs, to the processing unit 202, information received from the robot 40. The initial value setting unit 210 stores, in the parameter initial values 286 in the storing unit 280, an initial value of a parameter indicating an initial state of the neural network received at the communicating unit 208. Note that the initial value of the parameter of the neural network may be specified in advance at the server 200 or may be able to be altered by a user 30 through the communication network 90.

The external input data generating unit 230 processes at least part of sensor information received by the communicating unit 208, generates input information from the outside of the neural network, and outputs it to the parameter processing unit 240. Based on the input information, and the current parameter 288 of the neural network and the definition information 284 stored in the storing unit 280, the parameter processing unit 240 performs calculation about the neural network.

Artificial neurons that the neural network has include: a plurality of artificial neurons for which situations of the robot 40 are defined; a plurality of emotion artificial neurons for which a plurality of emotions of the robot 40 itself are defined; and a plurality of endocrine artificial neurons for which states of generation of endocrine substances of the robot 40 itself are defined. Based on the input information generated by the external input data generating unit 230, the parameter processing unit 240 calculates a parameter representing the internal state of the plurality of artificial neurons in the neural network. For example, based on the input information generated by the external input data generating unit 230, the parameter processing unit 240 updates a parameter of the current internal state of the plurality of artificial neurons for which the situation of the robot 40 is defined or the like. Also, the parameter processing unit 240 calculates a parameter of the internal state of other artificial neurons in the neural network. Thereby, for example, a parameter of the internal state of an emotion artificial neuron for which an emotion of being "pleased" is defined is calculated. This parameter of the internal state of the emotion artificial neuron is one example of an index representing the intensity of the emotion of being "pleased". Accordingly, based on the internal state of an emotion artificial neuron, the parameter processing unit 240 can determine the intensity of an emotion in a control system. In this manner, the parameter processing unit 240 functions as an emotion determining unit that based on at least part of information detected by sensors provided to the sensor unit 156, determines the intensity of an emotion using the neural network.

The parameter of the neural network calculated by the parameter processing unit 240 is supplied to the switching control unit 260 and the operation determining unit 250. Based on the parameter supplied from the parameter processing unit 240, the switching control unit 260 determines a recording format for information generated by the processing unit 152 of the robot 40. If it is necessary to switch the recording format for information generated by the processing unit 152, the switching control unit 260 causes an instruction to switch the recording format to be transmitted to the robot 40 through the communicating unit 208. At the robot 40, the processing unit 152 switches the recording format according to the instruction received from the server 200.

For example, if the processing unit 152 is being caused to generate first recording format information, the switching control unit 260 transmits, to the robot 40, an instruction to switch the recording format for information to be generated by the processing unit 152 from the first recording format to the second recording format, in response to increase in the intensity of an emotion determined by the parameter processing unit 240. In this manner, the switching control unit 260 switches the recording format for information to be recorded by the recording control unit 270 from the first recording format to the second recording format in response to increase in the intensity of the emotion determined by the parameter processing unit 240. Thereby, information at the time when an emotion of the robot 40 intensified can be kept as a record in detail. Also, at the robot 40, the processing unit 152 acquires moving image data in the second recording format acquired from the server 200, and generates a video to be presented to a user 30. Accordingly, the user 30 can enjoy information at the time when an emotion of the robot 40 intensified as a video.

Note that if the processing unit 152 is being caused to generate second recording format information, the switching control unit 260 transmits, to the robot 40, an instruction to switch the recording format for information to be generated by the processing unit 152 from the second recording format to the first recording format, in response to decrease in the intensity of an emotion determined by the parameter processing unit 240. In this manner, the switching control unit 260 switches the recording format for information to be recorded by the recording control unit 270 from the second recording format to the first recording format in response to decrease in the intensity of the emotion determined by the parameter processing unit 240.

The operation determination rule 282 specifies an operation to be performed by the robot 40 in association with a state of the robot 40. For example, the operation determination rule 282 specifies an operation to be performed by the robot 40 in association with an internal state of an artificial neuron of the neural network. For example, the operation determination rule 282 specifies an operation to cause the robot 40 to utter a phrase representing pleasedness in association with a condition that an emotion artificial neuron for which an emotion being "pleased" is defined is high. Also, the operation determination rule 282 specifies an operation to be performed when the robot 40 gets sleepy in association with a condition that an internal state of an endocrine artificial neuron for which an endocrine substance corresponding to sleepiness is defined is high.

Note that an endocrine substance means a substance that conveys signals secreted in the body, such as neurotransmitter or hormones. Also, being "endocrine" means that endocrine substances are secreted in the body. However, an endocrine substance of the robot 40 itself is one form of information that influences operations of the robot 40, but does not mean that the robot 40 actually generates an endocrine substance. An emotion of the robot 40 itself is likewise one form of information that influences operations of the robot 40, but does not mean that the robot 40 is actually feeling an emotion.

The operation determining unit 250 determines an operation of the robot 40 based on an operation specified in the operation determination rule 282 in association with the activation state or internal state of each artificial neuron determined by the parameter processing unit 240. Operation information indicating an operation determined by the operation determining unit 250 is transmitted from the communicating unit 208 to the robot 40. At the robot 40, by controlling the control target 155, the processing unit 152 causes the control target 155 to perform the operation indicated by the information received from the server 200. Thereby, the robot 40 can perform an appropriate operation corresponding to the current emotion of the robot 40.

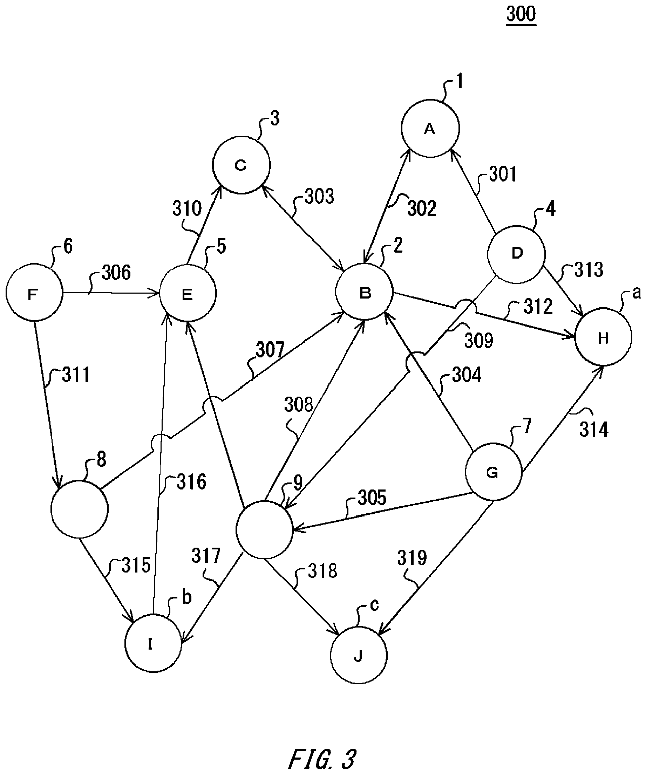

FIG. 3 schematically shows a neural network 300. The neural network 300 is an exemplary neural network for explaining an operation of the parameter processing unit 240. The neural network 300 includes a plurality of artificial neurons including an artificial neuron 1, artificial neuron 2, artificial neuron 3, artificial neuron 4, artificial neuron 5, artificial neuron 6, artificial neuron 7, artificial neuron 8, artificial neuron 9, artificial neuron a, artificial neuron b and artificial neuron c. The neural network 300 includes a plurality of artificial synapses including an artificial synapse 301, artificial synapse 302, artificial synapse 303, artificial synapse 304, artificial synapse 305, artificial synapse 306, artificial synapse 307, artificial synapse 308, artificial synapse 309, artificial synapse 310, artificial synapse 311, artificial synapse 312, artificial synapse 313, artificial synapse 314, artificial synapse 315, artificial synapse 316, artificial synapse 317, artificial synapse 318 and artificial synapse 319. Artificial neurons correspond to neurons in a living form. Artificial synapses correspond to synapses in a living form.

The artificial synapse 301 connects the artificial neuron 4 and the artificial neuron 1. The artificial synapse 301 is an artificial synapse connecting them unidirectionally, as indicated by the arrow of the artificial synapse 301. The artificial neuron 4 is an artificial neuron connected to an input of the artificial neuron 1. The artificial synapse 302 connects the artificial neuron 1 and the artificial neuron 2. The artificial synapse 302 is an artificial synapse connecting them bidirectionally, as indicated by the double arrow of the artificial synapse 302. The artificial neuron 1 is an artificial neuron connected to an input of the artificial neuron 2. The artificial neuron 2 is an artificial neuron connected to an input of the artificial neuron 1.

Note that in the present embodiment, an artificial neuron is represented by N, and an artificial synapse is represented by S, in some cases. Also, each artificial neuron is discriminated using a superscript reference symbol as the discrimination character. Also, a given artificial neuron is in some cases represented using i or j as a discrimination character. For example, Nⁱ represents a given artificial neuron.

Also, an artificial synapse is in some cases discriminated using respective discrimination numbers i and j of two artificial neurons connected to the artificial synapse. For example, S⁴¹ represents an artificial synapse connecting N¹ and N⁴. Generally, S^{ij} represents an artificial synapse that inputs an output of Nⁱ to N^{j}. Note that S^{ji} represents an artificial synapse that inputs an output of N^{j} to Nⁱ.

In FIG. 3, A to J represent that the state of the robot 40 is defined. The state of the robot 40 includes emotions of the robot 40, the state of generation of an endocrine substance, a situation of the robot 40, and the like. As one example, N⁴, N⁶ and N⁷ are concept artificial neurons for which concepts representing the situation of the robot 40 are defined. For example, N⁴ is a concept artificial neuron to which a situation "a bell rang" is allocated. N⁶ is a concept artificial neuron to which a situation "charging has started" is allocated. N⁷ is a concept artificial neuron to which a situation "the power storage amount is equal to or lower than a threshold" is allocated.

N¹, N³. N^{b} and N^{c} are emotion artificial neurons for which emotions of the robot 40 are defined. N¹ is an emotion artificial neuron to which an emotion "pleased" is allocated. N³ is an emotion artificial neuron to which an emotion "sad" is allocated. N^{b} is an emotion artificial neuron to which an emotion of being "scared" is allocated. N^{c} is an emotion artificial neuron to which an emotion of having "fun" is allocated.

N², N⁵ and N^{a} are endocrine artificial neurons for which endocrine states of the robot 40 are defined. N⁵ is an endocrine artificial neuron to which a dopamine-generated state is allocated. Dopamine is one example of endocrine substances related to the reward system. That is, N⁵ is one example of endocrine artificial neurons related to the reward system. N² is an endocrine artificial neuron to which a serotonin-generated state is allocated. Serotonin is one example of endocrine substances related to the sleep system. That is, N² is one example of endocrine artificial neurons related to the sleep system. N^{a} is an endocrine artificial neuron to which the state of generation of noradrenaline is allocated. Noradrenaline is one example of an endocrine substance related to the sympathetic nervous system. That is, N^{a} is an endocrine artificial neuron related to the sympathetic nervous system.

Information defining the state of the robot 40 like the ones mentioned above is stored in the definition information 284 in the storing unit 280, for each artificial neuron of the plurality of artificial neurons constituting the neural network. In this manner, the neural network 300 includes concept artificial neurons, emotion artificial neurons, and endocrine artificial neurons. The concept artificial neurons, emotion artificial neurons and endocrine artificial neurons are artificial neurons for which meanings such as concepts, emotions or endocrines are defined explicitly. In contrast to this, N⁸ and N⁹ are artificial neurons for which states of the robot 40 are not defined. Also, N⁸ and N⁹ are artificial neurons for which meanings such as concepts, emotions or endocrines are not defined explicitly.

Parameters of the neural network 300 include Iₜⁱ which is an input to each Nⁱ of the neural network, Eₜⁱ which is an input from the outside of the neural network to N', parameters of Nⁱ and parameters of S'.

The parameters of Nⁱ include Sₜⁱ representing the status of Nⁱ, Vⁱmₜ representing an internal state of the artificial neuron represented by Nⁱ, T't representing a threshold for firing of Nⁱ, t_{f} representing a last firing clock time which is a clock time when Nⁱ fired last time, Vⁱm_{tf} representing an internal state of the artificial neuron Nⁱ at the last firing clock time, and aₜⁱ, bₜⁱ and hₜⁱ which are increase-decrease parameters of outputs. The increase-decrease parameters of outputs are one example of parameters specifying time evolution of outputs at the time of firing of an artificial neuron. Note that in the present embodiment, a subscript t represents that the parameter provided with the subscript is a parameter that can be updated along with the lapse of clock time. Also, Vⁱmₜ is information corresponding to an membrane potential of an artificial neuron, and is one example of a parameter representing the internal state or output of the artificial neuron.

The parameters of S^{ij} include BSₜ^{ij} representing a coefficient of connection of an artificial synapse of S^{ij}, t_{cf} representing a last simultaneous firing clock time which is a clock time when Nⁱ and N^{j} connected by S^{ij} fired simultaneously last time, BS^{ij}_{tcf} representing a coefficient of connection at the last simultaneous firing clock time, and aₜ^{ij}, bₜ^{ij} and hₜ^{ij} which are increase-decrease parameters of the coefficients of connection. The increase-decrease parameters of the coefficients of connection are one example of parameters specifying time evolution of the coefficients of connection after two artificial neurons connected by an artificial synapse fired simultaneously last time.

The parameter processing unit 240 updates the above-mentioned parameters based on an input from the external input data generating unit 230 and the neural network to determine the activation state of each artificial neuron. The operation determining unit 250 determines an operation of the robot 40 based on: internal states or activation states of at least some artificial neurons among a plurality of artificial neurons in the neural network specified by values of parameters of the at least some artificial neurons; and states defined for at least some artificial neurons by the definition information 284. Note that an activation state may either be an activated state or an inactivated state. In the present example, to be activated is called "to fire" and being inactivated is called "unfiring", in some cases. Note that, as mentioned below, the "firing" state is classified into a "rising phase" and a "falling phase" depending on whether or not an internal state is on the rise. "Unfiring", and a "rising phase" and a "falling phase" are represented by a status Sₜⁱ.

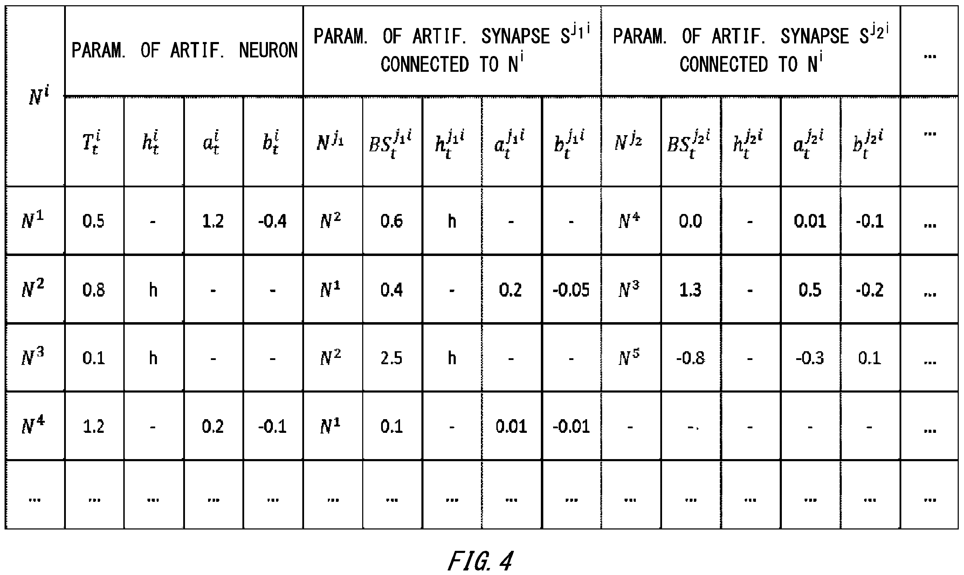

FIG. 4 schematically shows parameters of a neural network in a table format. Each neuron N has, as parameters, a threshold Tₜ, and increase-decrease parameters hₜ, aₜ and bₜ. Also, each artificial synapse includes, as parameters, a coefficient of connection BSₜ, and increase-decrease parameters hₜ, aₜ and bₜ. FIG. 4 shows, in one row for each Nⁱ, respective parameters of all the artificial neurons directly connected to Nⁱ through artificial synapses, and respective parameters of the artificial synapses.

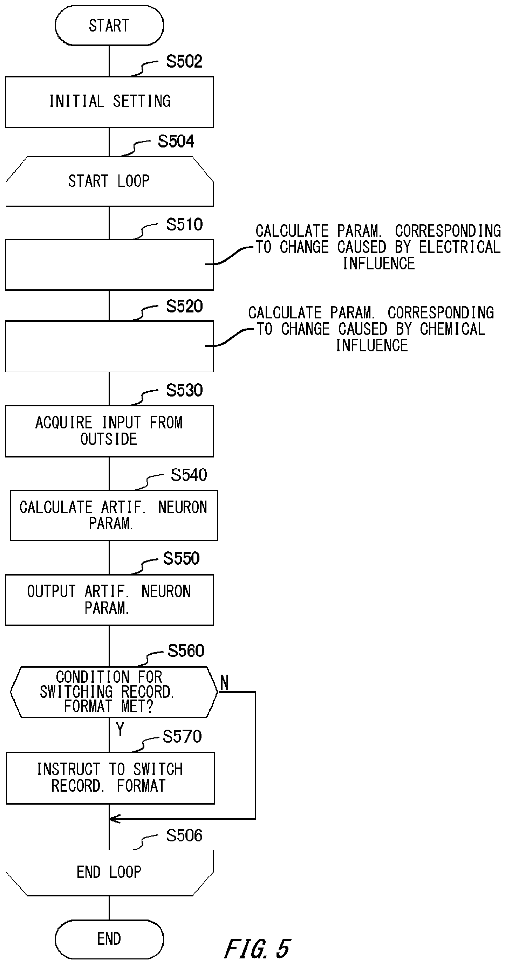

FIG. 5 schematically shows an operation flow of the server 200 performed when the robot 40 is activated or reset. In the server 200, upon reception of information indicating that the robot 40 is activated or reset, the parameter processing unit 240 performs initial setting of parameters of the neural network. For example, the parameter processing unit 240 acquires initial values of parameters from the storing unit 280 to generate parameter data of the neural network in a predetermined data structure (S502). Also, it sets parameter values of the neural network at a clock time t₀. Upon completion of the initial setting, at S504, it starts a loop about the clock time t.

At S510, the parameter processing unit 240 calculates parameters corresponding to a change due to electrical influence of an artificial synapse at a temporal step tₙ₊₁. Specifically, it calculates BSₜ^{ij} of a given S^{ij}.

At S520, the parameter processing unit 240 calculates parameters corresponding to a change due to chemical influence caused by an endocrine substance at the temporal step tₙ₊₁. Specifically, changes in parameters of Nⁱ and S^{ij} that the endocrine artificial neuron has influence on are calculated. More specifically, it calculates an increase-decrease parameter or threshold of an internal state of the artificial neuron Nⁱ that the endocrine artificial neuron has influence on and an increase-decrease parameter of a coefficient of connection or the coefficient of connection of S^{ij} that the endocrine artificial neuron has influence on at the temporal step tₙ₊₁.

At S530, the parameter processing unit 240 acquires an input from the outside of the neural network. Specifically, the parameter processing unit 240 acquires an output of the external input data generating unit 230.

At S540, the parameter processing unit 240 calculates an internal state of Nⁱ at the temporal step tₙ₊₁. Specifically, it calculates Vⁱmₜₙ₊₁ and a status Sₜₜⁱ. Then, at S550, it stores each parameter value at the clock time tₙ₊₁ in the parameters 288 of the storing unit 280. Also, it outputs the value of each parameter at the clock time tₙ₊₁ to the operation determining unit 250 and the switching control unit 260.

At S 560, the switching control unit 260 judges whether or not the parameter of Nⁱ at the temporal step tₙ₊₁ meets a condition for switching a format in which data to be stored in the recording data 292 is recorded. If the parameter of Nⁱ at the temporal step tₙ₊₁ meets the recording format switching condition, the switching control unit 260 instructs the robot 40 to switch the recording format (S570), and the process proceeds to S506. On the other hand, if at S 560, the parameter of Nⁱ at the temporal step tₙ₊₁ does not meet the recording format switching condition, the process proceeds to S506.

At S506, the parameter processing unit 240 judges whether or not to terminate the loop. For example, if the clock time represented by temporal steps has reached a predetermined clock time or if sensor information from the robot 40 has not been received for a length of time specified in advance, it judges to terminate the loop. If the loop is not to be terminated, the process returns to S510, and calculation for a still next temporal step is performed. If the loop is to be terminated, this flow is terminated.

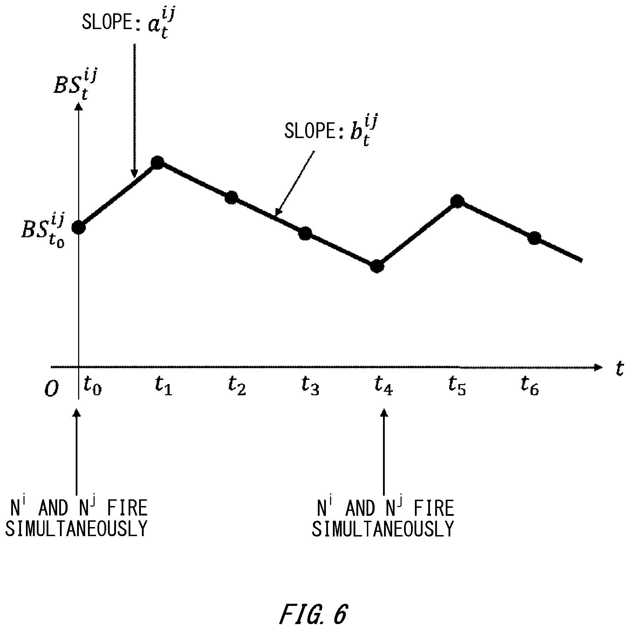

FIG. 6 is a figure for schematically explaining calculation of a coefficient of connection of an artificial synapse. Here, a case where constants aⁱⁱ and b^{ij} are defined as initial values of increase-decrease parameters is explained.

If both Nⁱ and N^{j} at both ends of S^{ij} are firing at a temporal step of a clock time tₙ, the parameter processing unit 240 calculates BSₜₙ₊₁^{ij} at the clock time tₙ₊₁ according to BSₜₙ₊₁^{ij}=BSₜₙ^{ij}+aₜₙ^{ij}×(tₙ₊₁-tₙ). On the other hand, if both Sⁱ and S^{j} are not firing at the temporal step of the clock time tₙ, it calculates the coefficient of connection BSₜₙ₊₁^{ij} at the clock time tₙ₊₁ according to BSₜₙ₊₁^{ij}=BSₜₙ^{ij}+bₜₙ^{ij}×(tₙ₊₁-tₙ). Also, if BSₜₙ₊₁^{ij} becomes a negative value, BSₜₙ₊₁^{ij} is regarded as 0. Note that for S^{ij} for which BS^{ij} is a positive value, aₜ^{ij} is a positive value and bₜ^{ij} is a negative value. For S^{ij} for which BS^{ij} is a negative value, aₜ^{ij} is a positive value and bₜ^{ij} is a negative value.

Because as shown in FIG. 6, artificial neurons at both ends are simultaneously firing at the clock time t₀, BSₜ^{ij} increases by aₜ₀^{ij} per unit time. Also, because they are not simultaneously firing at the clock time t1, BSₜ^{ij} decreases by |bₜ₁^{ij}| per unit time. Also, due to simultaneous firing at a clock time t₄, BSₜ^{ij} increases by aₜ₄^{ij} per unit time.

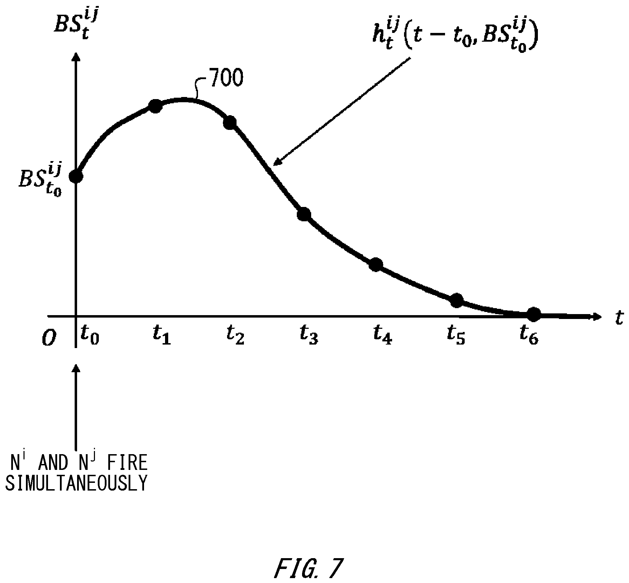

FIG. 7 schematically shows time evolution of a coefficient of connection in a case where a function hₜ^{ij} is defined as an increase-decrease parameter of the coefficient of connection. hₜ^{ij} is defined about time Δt elapsed after t_{cf} (= t-t_{cf}) ≥ 0. hₜ^{ij} is a function of at least Δt, and gives real number values.

A function 700 shown in FIG. 7 is one example of hₜ^{ij}. The function 700 is a function of a coefficient of connection BS_{tcf}^{ij} at a clock time t_{cf} and Δt. The function 700 monotonically increases if Δt is in a range lower than a predetermined value, and monotonically decreases and gradually decreases toward 0 if Δt is larger than the predetermined value. The function 700 gives a value BS_{tcf}^{ij} at Δt=0.

FIG. 7 shows a coefficient of connection in a case where the function 700 is defined as an increase-decrease parameter of the coefficient of connection, and Nⁱ and N^{j} at both ends simultaneously fired at the clock time t₀. The parameter processing unit 240 calculates BSₜ^{ij} of each clock time of the clock time t₁ to clock time t₆ based on the function 700 and Δt. In a time range of the clock time t₁ to clock time t₆, Nⁱ and N^{j} are not simultaneous firing. Therefore, for example, at and after the clock time t₂, the coefficient of connection monotonically decreases.

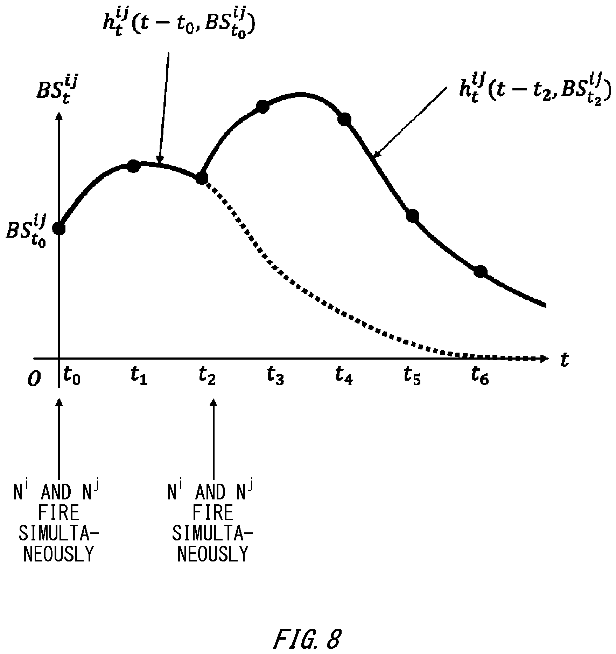

FIG. 8 schematically shows time evolution of a coefficient of connection observed when Nⁱ and N^{j} simultaneously fired further at a clock time t₂. The coefficient of connection is, from the clock time t₀ to clock time t₂, calculated in a similar manner to the manner explained in relation to FIG. 7. If Nⁱ and N^{j} simultaneously fire further at the clock time t₂, the parameter processing unit 240 calculates the coefficient of connection at each clock time of the clock times t₃ to t₆ according to hₜ^{ij} (t-t₂, BSₜ₂^{ij}). In this manner, every time simultaneous firing is repeated, the coefficient of connection rises. Thereby, as in Hebbian theory in a living form, an effect of reinforcing artificial synaptic connection, and so on are attained. On the other hand, as shown in FIG. 6 and FIG. 7, if time during which simultaneous firing does not occur prolongs, an effect of attenuating artificial synaptic connection is attained.

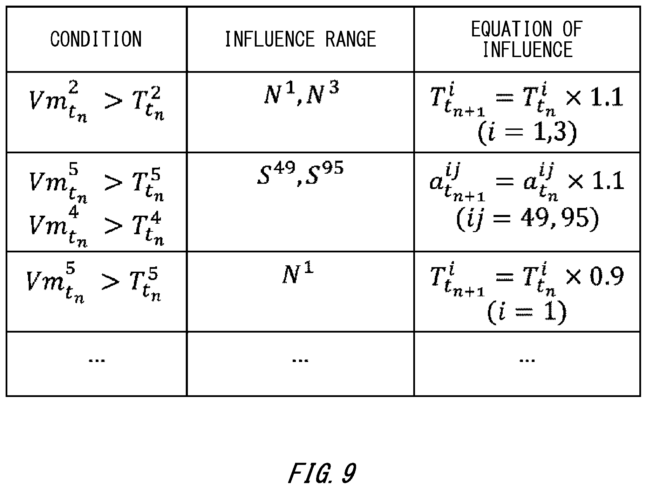

FIG. 9 schematically shows influence definition information defining chemical influence on a parameter. This influence definition information is used in calculation of changes in parameters at S520 in FIG. 5. The definition information includes conditions about an internal state of an endocrine artificial neuron, information identifying an artificial neuron or artificial synapse to be influenced, and equations specifying influence details.

In the example of FIG. 9, an endocrine artificial neuron N² is an endocrine artificial neuron to which an endocrine substance of sleepiness is allocated. The definition information about the endocrine artificial neuron N² specifies: the condition "Vmₜₙ² > Tₜₙ²"; the "emotion artificial neurons N¹ and N³" as artificial neurons that the endocrine artificial neuron N² has influence on; and "Tₜₙ₊₁ⁱ=Tₜₙⁱ×1.1" as an equation specifying influence details. Thereby, if Vmₜₙ² exceeds Tₜₙ², the parameter processing unit 240 increases thresholds for the emotion artificial neurons N¹ and N³ by 10% at the clock time tₙ₊₁. Thereby, for example, it becomes possible to make it less likely for an emotion artificial neuron to fire if sleepiness occurs. For example, by specifying a neural network in which an output of the concept artificial neuron N⁷, for which "the power storage amount is equal to or lower than a threshold" is defined, is connected to an input of the endocrine artificial neuron N², it becomes possible to embody a phenomenon in which it becomes less likely for an emotion to intensify if the power storage amount lowers.

Also, the endocrine artificial neuron N⁵ is an endocrine artificial neuron to which dopamine is allocated. First definition information about the endocrine artificial neuron N⁵ specifies: the condition "Vmₜₙ⁵>Tₜₙ⁵ and Vmₜₙ⁴>Tₜₙ⁴"; "S⁴⁹ and S⁹⁵" as artificial synapses that the endocrine artificial neuron N⁵ has influence on; and "aₜₙ₊₁^{ij}=aₜₙ^{ij}×1.1" as an equation specifying influence details. Thereby, if Vmₜₙ⁵ exceeds Tₜₙ⁵ and additionally Vmₜₙ⁴ exceeds tₜₙ⁴, the parameter processing unit 240 increases increase-decrease parameters of the artificial synapse S⁴⁹ and S⁹⁵ by 10% at the clock time tₙ₊₁.

Thereby, when the concept artificial neuron N⁴ for which a situation "a bell rang" is defined is firing if an endocrine artificial neuron of reward system fired, connection between the concept artificial neurons N⁴ and N⁵ through the implicit artificial neuron N⁹ can be strengthened. Thereby, it becomes easier for the endocrine artificial neuron N⁵ of reward system to fire if "a bell rang".

Also, second definition information about the endocrine artificial neuron N⁵ specifies: the condition "Vmₜₙ⁵>Tₜₙ⁵"; "N¹" as an artificial neuron that the endocrine artificial neuron N⁵ has influence on; and "Tₜₙ₊₁ⁱ=Tₜₙⁱ×1.1" as an equation specifying influence details. Thereby, if Vmₜₙ⁵ exceeds Tₜₙ⁵, the parameter processing unit 240 lowers the increase-decrease parameter of the artificial neuron N¹ by 10% at the clock time tₙ₊₁. Thereby, it becomes easier for an emotion "pleased" to fire if the endocrine artificial neuron N⁵ of reward system fired.

According to such definitions specifying influence about an endocrine artificial neuron of reward system, an implementation becomes possible in which if an act of charging the robot 40 while ringing a bell is repeated, simply ringing a bell causes the robot 40 to take an action representing pleasedness.

Note that the influence definition information is not limited to the example of FIG. 9. For example, as a condition, a condition that an internal state of an artificial neuron is equal to or lower than a threshold may be defined. Also, a condition about the status of an artificial neuron, for example, a condition about a rising phase, falling phase or unfiring, may be defined. Also, other than directly designating an artificial neuron or artificial synapse, another possible example of the definition of the range of influence may be "all the artificial synapses connected to a particular artificial neuron". Also, if a target is an artificial neuron, as the equation of influence, other than an equation to multiply a threshold by a constant, an equation to add a constant to a threshold or multiply an increase-decrease parameter of an internal state by a constant may be defined. Also, if a target is an artificial synapse, other than an equation to multiply an increase-decrease parameter by a constant, an equation to multiply a coefficient of connection by a constant may be defined.

The influence definition information is stored in the definition information 284 of the storing unit 280. In this manner, the storing unit 280 stores the influence definition information specifying influence of at least one of an internal state and firing state of an endocrine artificial neuron on a parameter of at least one of an artificial synapse and another artificial neuron not directly connected to the endocrine artificial neuron by an artificial synapse. Then, the parameter processing unit 240 updates parameters of the at least one of the artificial synapse and the other artificial neuron not directly connected to the endocrine artificial neuron by the artificial synapse based on the at least one of the internal state and firing state of the endocrine artificial neuron and the influence definition information. Also, parameters of the other artificial neuron that the at least one of the internal state and firing state of the endocrine artificial neuron has influence on can include at least one of parameters specifying a threshold, firing state and time evolution of an output at the time of firing of the other artificial neuron. Also, parameters of the artificial synapse that the at least one of the internal state and firing state of the endocrine artificial neuron has influence on can include at least one of parameters specifying a coefficient of connection of the artificial synapse, and time evolution of the coefficient of connection after two artificial neurons connected by the artificial synapse simultaneously fired last time. Also, the influence definition information includes information specifying influence that the firing state of an endocrine artificial neuron related with reward system has on a threshold of an emotion artificial neuron, and the parameter processing unit 240 updates the threshold of the emotion artificial neuron according to the influence definition information if the endocrine artificial neuron fired.

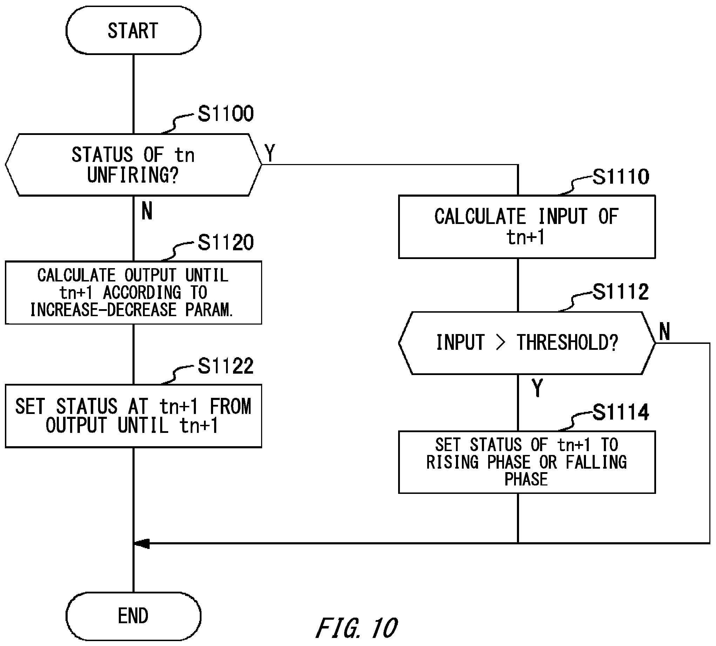

FIG. 10 shows a flowchart about calculation of Vₜₙ₊₁ⁱ and Sₜₙ₊₁ⁱ. The processes in this flowchart can be applied to some of the processes at S540 in FIG. 5. At S1100, the parameter processing unit 240 judges whether or not Sₜₙⁱ indicates unfiring.

If Sₜₙⁱ indicates unfiring, the parameter processing unit 240 calculates an input Iₜₙ₊₁ⁱ to Nⁱ (S1110). Specifically, if an input from the outside of the neural network is not connected to N', it is calculated according to Iₜₙ₊₁ⁱ=∑ⱼBSₜₙ₊₁^{ji}×Vmₜₙ^{j}×f(Sₜₙ^{j}). If an input from the outside of the neural network is connected to N', it is calculated according to Iₜₙ₊₁ⁱ=∑ⱼBSₜₙ₊₁^{ji}×Vmₜₙ^{j}×f(Sₜₙ^{j})+Eₜₙ₊₁ⁱ. Here, Eₜₙⁱ is an input at the clock time tₙ from the outside of the neural network.

Also, f(S) gives 0 if S is a value representing unfiring, and gives 1 if S is a value indicating a rising phase or falling phase. This model corresponds to a model in which a synapse conveys action potential only if a neuron fired. Note that it may give f(S)=1. This corresponds to a model in which membrane potential is conveyed regardless of the firing state of a neuron.

At S1112, the parameter processing unit 240 judges whether or not Iₜₙ₊₁ⁱ exceeds Tₜₙ₊₁ⁱ. If Iₜₙ₊₁ⁱ exceeds Tₜₙ₊₁ⁱ, the parameter processing unit 240 calculates Vmₜₙ₊₁ⁱ based on an increase-decrease parameter, sets Sₜₙ₊₁ⁱ to a value indicating a rising phase or falling phase according to Vmₜₙ₊₁ⁱ (S1114), and terminates this flow.

At S1100, if Sₜₙⁱ is in a rising phase or falling phase, the parameter processing unit 240 calculates Vmₜₙ₊₁ⁱ (S1120). Then, the parameter processing unit 240 sets Sₜₙ₊₁ⁱ to a value of unfiring if Vmₜⁱ reached Vmin before tₙ₊₁, sets Sₜₙ₊₁ⁱ to a value of a rising phase or falling phase if Vmₜⁱ has not reached Vmin before tₙ₊₁, and terminates this flow. Note that the parameter processing unit 240 sets a value of a falling phase to Sₜₙ₊₁ⁱ if Vmₜⁱ reached Vmax before tₙ₊₁, and sets a value of a rising phase to Sₜₙ₊₁ⁱ if Vmₜⁱ has not reached Vmax before tₙ₊₁.

In this manner, if Nⁱ is firing, an output of Nⁱ is not dependent on an input even if the output becomes equal to or lower than a threshold. Such a time period corresponds to an absolute refractory phase in a neuron of a living form.

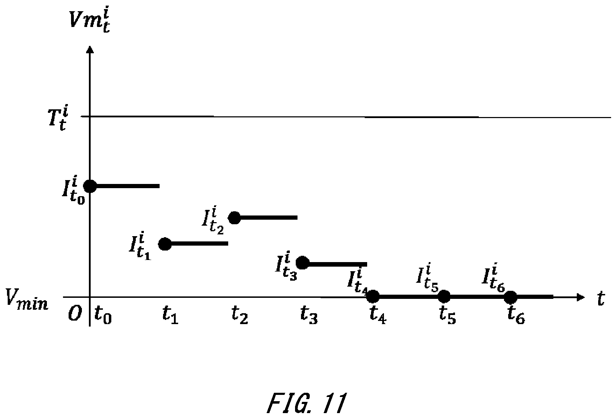

FIG. 11 is a figure for schematically explaining an example about calculation of Vₜⁱ in a case where N' does not fire.

At the temporal step of the clock time t₀, Nⁱ is unfiring. If Iₜ₁ⁱ at the clock time t₁ is equal to or lower than Tₜ₁ⁱ, the parameter processing unit 240 calculates Vₜ₁ⁱ at the clock time t₁ according to Vₜ₁ⁱ=Iₜ₁ⁱ, and calculates Vₜⁱ during a time period from the clock times t₀ to t₁ according to Vₜⁱ=Iₜ₀ⁱ. Also, likewise, the parameter processing unit 240 maintains the value of Vₜₙ calculated at the clock time step tₙ until a next clock time step, and changes it to Iₜₙ₊₁ at Vₜₙ₊₁.

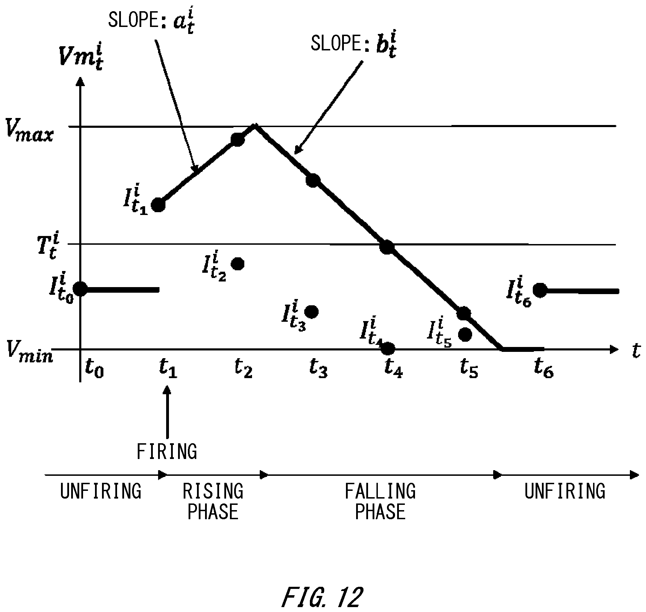

FIG. 12 is a figure for schematically explaining an example about calculation of V't in a case where N' fires. FIG. 12 shows an example about calculation in a case where constants aⁱ and b' are defined.

At the temporal step of the clock time t₀, Nⁱ is unfiring. If Iₜ₁ⁱ at the clock time t₁ exceeds Tₜ₁ⁱ, the parameter processing unit 240 calculates Vₜ₁ⁱ at the clock time t₁ according to Vₜ₁ⁱ=Iₜ₁ⁱ, and calculates Vₜⁱ during a time period from the clock times t₀ to t₁ according to Vₜⁱ=Iₜ₀ⁱ. Note that it is assumed here that Iₜ₁ⁱ at the clock time t₁ is equal to or lower than Vmax. If Iₜ₁ⁱ at the clock time t₁ exceeds Vmax, Iₜ₁ⁱ=Vmax.

As shown in FIG. 12, at and after the clock time t₁, the parameter processing unit 240 increases Vₜⁱ by aₜ^{ij} per unit time until a clock time when Vₜⁱ reaches Vmax. Also, the parameter processing unit 240 determines the status St' of Nⁱ in this time period as a rising phase.

Also, upon Vₜⁱ reaching Vmax, Vₜⁱ is decreased by |bₜⁱ| per unit time until Vₜⁱ reaches Vmin. Also, the parameter processing unit 240 determines the status of Nⁱ in this time period as a falling phase. Then, upon Vₜⁱ reaching Vmin, Vₜ₆ⁱ at a next clock time is calculated according to Vₜ₆ⁱ=Iₜ₆ⁱ. Also, the status after Vₜⁱ reached Vmin is determined as unfiring.

Note that if the status of Nⁱ is a falling phase, Vmₜⁱ is not dependent on Iₜⁱ even if the calculated Vmₜⁱ falls below Tₜⁱ. Even if Vmₜⁱ falls below Tₜⁱ, the parameter processing unit 240 calculates Vmₜⁱ according to an increase-decrease parameter until Vmₜⁱ reaches Vmin.

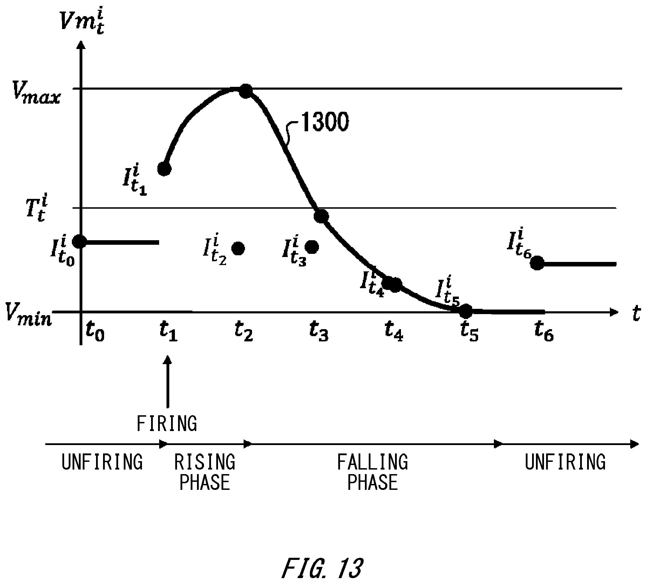

FIG. 13 schematically shows time evolution of a coefficient of connection in a case where a function hₜⁱ is defined as an increase-decrease parameter of N'. Generally, hₜⁱ is defined about time Δt elapsed after the clock time of firing t_{f} (= t-t_{f}) ≥ 0. hₜⁱ is a function of at least Δt. hₜⁱ gives real number values, and the value range of hₜⁱ is Vmin or higher and Vmax or lower.

A function 1300 shown in FIG. 13 is one example of hₜⁱ. The function 1300 is a function of Vm_{tf}ⁱ and Δt at the clock time t_{f}. The function 1300 monotonically increases if Δt is in a range lower than a predetermined value, and monotonically decreases if Δt is larger than the predetermined value. The function 1300 gives a value Vm_{tf}ⁱ at Δt=0.

FIG. 13 shows an output in a case where the function 1400 is defined as an increase-decrease parameter of the internal state and N' fired at the clock time t₁. The parameter processing unit 240 calculates Vmₜⁱ of each clock time of the clock time t₁ to clock time t₅ based on the function 1400, Δt and Vm_{f}ⁱ. Because Vmₜⁱ has reached Vmin at the clock time t₅, Vmₜⁱ=Iₜ₆ⁱ at the clock time t6.

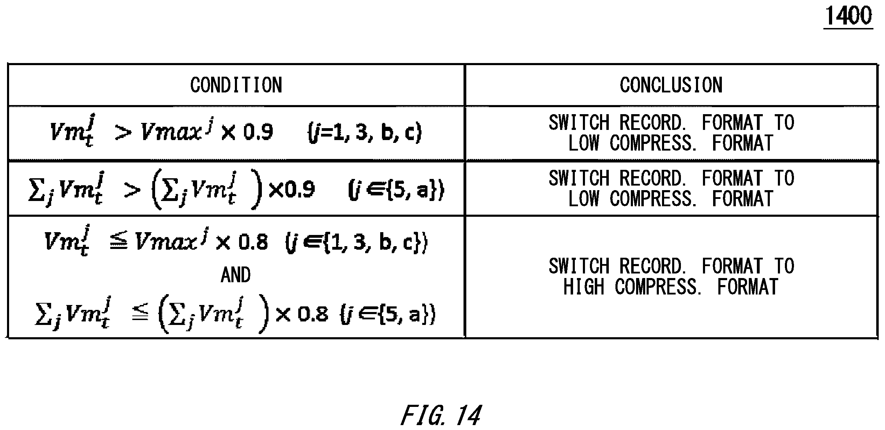

FIG. 14 shows, in a table format, one example of a rule 1400 stored in a recording format switching rule 290. In the rule 1400, an operation to "switch" information recording format "to a low compression format" if at least a first condition that Vmₜⁱ of any of N¹, N³, N^{b} and N^{c} exceeded a threshold is met is specified. Thereby, when there is a transition from a state where the first condition is not met to a state where the first condition is met if information is being recorded in a high compression format, the switching control unit 260 judges to switch the information recording format to the low compression format. Note that a value obtained by multiplying Vmax of respective N^{j} with a constant 0.9 is shown as an example of the threshold. The threshold may be higher than Tⁱₜ.

Also, the rule 1400 specifies an operation to "switch" data recording format "to a low compression format" if at least a second condition that the total value of Vmₜⁱ of N⁵ and N^{a} exceeded a threshold is met. Thereby, when there is a transition from a state where the second condition is not met to a state where the second condition is met if information is being recorded in a high compression format, the switching control unit 260 judges to switch the information recording format to the low compression format. Note that a value obtained by multiplying the total value of Vmax of respective N^{j} with a constant 0.9 is shown as an example of the threshold. The threshold may be higher than the total value of T't of respective N^{j}.

N¹, N³, N^{b} and N^{c} are emotion artificial neurons for which emotions of "pleased", "sad", "scared" and "fun" are defined, respectively. Accordingly, at the parameter processing unit 240, the intensity of an emotion is determined based on an internal state of an emotion artificial neuron, and in response to the determined intensity of the emotion exceeding a threshold specified in advance, the recording format can be switched to a low compression format.

N⁵ and N^{a} are endocrine artificial neurons for which endocrine substances "dopamine" and "noradrenaline" are defined, respectively. The total value of parameters of internal states of these endocrine artificial neurons is one example of an index representing the intensity of an emotion of being "excited". Accordingly, at the parameter processing unit 240, the intensity of an emotion is determined based on an internal state of an endocrine artificial neuron, and in response to the determined intensity of the emotion exceeding a threshold specified in advance, the recording format can be switched to a low compression format.

Also, the rule 1400 specifies an operation to "switch" data recording format "to a high compression format" if a third condition that Vmₜⁱ of N¹, N³, N^{b} and N^{c} are all equal to or lower than a first threshold and the total value of Vmₜⁱ of N⁵ and N^{a} is equal to or lower than a second threshold is met. Accordingly, when there is a transition from a state where the third condition is not met to a state where the third condition is met if information is being recorded in a low compression format, the switching control unit 260 judges to switch the information recording format to the high compression format. In this manner, in response to the intensity of an emotion becoming equal to or lower than a threshold specified in advance, the recording format can be switched to a high compression format.

Note that the first threshold of the third condition is a value obtained by multiplying Vmax of respective N^{j} with a constant 0.8. Also, the second threshold of the third condition is a value obtained by multiplying the total value of Vmax of respective N^{j} with a constant 0.8. In this manner, a case where the first threshold of the third condition is lower than the threshold of the first condition, and the second threshold of the third condition is lower than the threshold of the second condition is shown as an example. However, the first threshold may be equal to the threshold of the first condition, and the second threshold may be equal to the threshold of the second condition. Also, the first threshold of the third condition may be higher than Tⁱₜ of respective N^{j}. Also, the second threshold of the third condition may be higher than the total value of Tⁱₜ of respective N^{j}. Also, not being limited to these examples, various values can be applied to the thresholds of the respective conditions.

According to the system 20, the robot 40 transmits, to the server 200, continuously information in a high compression format such as skeletal data for a time period during which an emotion of the robot 40 is not significantly intense, and causes the server 200 to record the information. The consecutive information such as skeletal data recorded in the server 200 can be used when analyzing a memory of the robot 40. Then, the robot 40 starts transmission of full HD video data and audio data if an emotion of the robot 40 intensifies significantly, and cause the server 200 to record information in a low compression format including full HD video data and audio data in addition to skeletal data for a time period during which the state where the emotion remains as intense as or is more intense than a certain value continues. Then, if for example the robot 40 is requested by a user 30 to provide a video of a memory of the robot 40, the robot 40 requests the server 200 to transmit full HD video data and audio data, and provides the video data and audio data received from the server 200 to the user 30.

In this manner, according to the system 20, high image quality video data of a scene in which the robot 40 felt a strong emotion can be accumulated in the server 200. On the other hand, if the robot 40 is not feeling a strong emotion, summarized information such as skeletal data can be accumulated in the server 200. In this manner, like a human, the robot 40 can keep a summarized memory of when it is not feeling a strong emotion while keeping a memory of when it felt a strong emotion vividly.

Note that although in the present embodiment, the emotions explained are "pleased", "sad", "scared", "fun" and "excited", emotions that the system 20 handles are not limited to them. Also, although in the present embodiment, the endocrine substances explained are "dopamine", "serotonin" and "noradrenaline", endocrine substances that the system 20 handles are not limited to them.

Also, functions of the server 200 may be implemented by one or more computers. At least some functions of the server 200 may be implemented by a virtual machine. Also, at least some of functions of the server 200 may be implemented in a cloud. Also, among functions of the server 200, functions of components excluding the storing unit 280 can be realized by a CPU operating based on a program. For example, at least some of the processes explained as operations of the server 200 can be realized by a processor controlling each piece of hardware (for example, a hard disk, a memory and the like) provided to a computer according to a program. In this manner, at least some of processes of the server 200 can be realized by the respective pieces of hardware including a processor, a hard disk, a memory and the like and a program operating in cooperation with each other by the processor operating according to a program to control the respective pieces of hardware. That is, the program can cause a computer to function as each component of the server 200. Likewise, among components of the robot 40, functions of components excluding the control target 155 and the sensor unit 156 can be realized by a CPU operating based on a program. That is, the program can cause a computer to function as each component of the robot 40. Note that the computer may read in a program to control execution of the above-mentioned processes, operate according to the program read in, and execute the processes. The computer can read in the program from a computer-readable recording medium having stored thereon the program. Also, the program may be supplied to the computer through a communications line, and the computer may read in the program supplied through the communications line.

In the examples explained above, the server 200, not the robot 40, is in charge of processes of a neural network. Also, the server 200, not the robot 40, stores information such as video data. However, the robot 40 itself may be in charge of functions of the server 200, such as processes of a neural network. Also, the robot 40 itself may store information such as video data. Also, the robot 40 is one example of equipment to be a target of control by the server 200. Equipment to be a control target is not limited to the robot 40, but various types of equipment such as home appliances, vehicles or toys may apply as control targets.

It is apparent to persons skilled in the art that various alterations and improvements can be added to the above-described examples

### [Explanation of Reference Symbols]

1, 2, 3, 4, 5, 6, 7, 8, 9, a, b, c: artificial neuron;
20: system;
30: user;
40: robot;
90: communication network;
152: processing unit;
155: control target;
156: sensor unit;
158: communicating unit;
161: microphone;
162: 3D depth sensor;
163: 2D camera;
164: distance sensor;
200: server;
202: processing unit;
208: communicating unit;
210: initial value setting unit;
230: external input data generating unit;
240: parameter processing unit;
250: operation determining unit;
260: switching control unit;
270: recording control unit;
280: storing unit;
282: operation determination rule;
284: definition information;
286: parameter initial value;
288: parameter;
290: recording format switching rule;
292: recording data;
300: neural network;
301, 302, 303, 304, 305, 306, 307, 308, 309, 310, 311, 312, 313, 314, 315, 316, 317,
318, 319: artificial synapse;
700, 1300: function;
1400: rule

## Claims

1. A control system (20) comprising:
a recording information generating unit that processes at least part of information detected continuously by a sensor (161, 162, 163, 164) of a robot and generates information in a first recording format and information in a second recording format having a larger amount of information than that of the information in the first recording format;
a recording control unit (270) that causes information generated by the recording information generating unit to be recorded;
an emotion determining unit (240) that determines intensity of an emotion of the robot at the control system (20) based on at least part of information detected by the sensor (161, 162, 163, 164); and
a switching control unit that switches a recording format of information which the recording control unit (270) causes to be recorded from the first recording format to the second recording format in response to increase in intensity of an emotion determined by the emotion determining unit (240) if the recording information generating unit is being caused to generate the information in the first recording format, wherein
the emotion determining unit (240) determines the intensity of the emotion using a neural network (300) based on at least part of information detected by the sensor (161, 162, 163, 164),
a plurality of artificial neurons (1, 2, 3, 4, 5, 6, 7, 8, 9, a, b, c) constituting the neural network (300) includes emotion artificial neurons, which are artificial neurons for which a current emotion of the robot is defined, and
the emotion determining unit (240) determines intensity of an emotion in the control system (20) based on an internal state of the emotion artificial neuron.

2. The control system (20) according to the previous claim, wherein
a plurality of artificial neurons (1, 2, 3, 4, 5, 6, 7, 8, 9, a, b, c) constituting the neural network (300) includes endocrine artificial neurons, which are artificial neurons for which a state of generation of endocrine substances of the robot is defined, and
the emotion determining unit (240) determines intensity of an emotion in the control system (20) based on an internal state of the endocrine artificial neuron.

3. The control system (20) according to any one of the previous claims, wherein
the sensor (161, 162, 163, 164) includes an image sensor (161, 162, 163, 164) that captures images of a photographic subject continuously,
the recording information generating unit generates shape data such that the information in the first recording format includes shape data expressing a shape of an object an image of which is captured by the image sensor (161, 162, 163, 164), and
the information in the second recording format includes moving image data which has a larger amount of information than that of shape data and is based on an output of the image sensor (161, 162, 163, 164).

4. The control system (20) according to the previous claim, further comprising:
a second recording information acquiring unit that acquires the information in the second recording format recorded by the recording control unit (270) and including the moving image data; and
a video generating unit (152) that generates a video to be presented to a user (30) based on the moving image data included in the information in the second recording format acquired by the second recording information acquiring unit.

5. The control system (20) according to any one of the previous claims, wherein the recording control unit (270) causes information generated by the recording information generating unit to be transmitted to an external server (200) and causes the server (200) to record the information.

6. The control system (20) according to any one of the previous claims, wherein the first recording format is a high compression format and the second recording format is a low compression format.

7. A system (20) comprising:
the control system (20) according to claim 5; and
the server (200).

8. A computer program comprising instructions which, when the program is executed by a computer, cause the computer to carry out the steps
processing at least part of information detected continuously by a sensor (161, 162, 163, 164) of a robot and generating information in a first recording format and information in a second recording format having a larger amount of information than that of the information in the first recording format by a recording information generating unit;
causing information generated by the recording information generating unit to be recorded by a recording control unit (270);
determining intensity of an emotion of the robot at the control system (20) based on at least part of information detected by the sensor (161, 162, 163, 164) by an emotion determining unit (240); and
switching a recording format of information which the recording control unit (270) causes to be recorded from the first recording format to the second recording format in response to increase in intensity of an emotion determined by the emotion determining unit (240) if the recording information generating unit is being caused to generate the information in the first recording format, wherein
the emotion determining unit (240) determines the intensity of the emotion using a neural network (300) based on at least part of information detected by the sensor (161, 162, 163, 164),
a plurality of artificial neurons (1, 2, 3, 4, 5, 6, 7, 8, 9, a, b, c) constituting the neural network (300) includes emotion artificial neurons, which are artificial neurons for which a current emotion of the robot is defined, and
the emotion determining unit (240) determines intensity of an emotion in the control system (20) based on an internal state of the emotion artificial neuron.

## Patentansprüche

1. Steuersystem (20) mit:
einer Aufzeichnungsinformationserzeugungseinheit, die mindestens einen Teil von Information verarbeitet, die durch einen Sensor (161, 162, 163, 164) eines Roboters kontinuierlich erfasst wird, und Information in einem ersten Aufzeichnungsformat und Information in einem zweiten Aufzeichnungsformat erzeugt, das eine größere Informationsmenge hat als die Information im ersten Aufzeichnungsformat;
einer Aufzeichnungssteuereinheit (270), die veranlasst, dass durch die Aufzeichnungsinformationserzeugungseinheit erzeugte Information aufgezeichnet wird;
einer Emotionsbestimmungseinheit (240), die die Intensität einer Emotion des Roboters am Steuersystem (20) basierend auf mindestens einem Teil der durch den Sensor (161, 162, 163, 164) erfassten Information bestimmt; und
einer Schaltsteuereinheit, die ein Aufzeichnungsformat von Information, deren Aufzeichnung durch die Aufzeichnungssteuereinheit (270) veranlasst wird, in Antwort auf eine Zunahme der durch die Emotionsbestimmungseinheit (240) bestimmten Intensität einer Emotion, wenn die Aufzeichnungsinformationserzeugungseinheit veranlasst wird, die Information im ersten Aufzeichnungsformat zu erzeugen, vom ersten Aufzeichnungsformat auf das zweite Aufzeichnungsformat umschaltet,
wobei die Emotionsbestimmungseinheit (240) die Intensität der Emotion unter Verwendung eines neuronalen Netzwerks (300) basierend auf mindestens einem Teil der durch den Sensor (161, 162, 163, 164) erfassten Information bestimmt,
mehrere künstliche Neuronen (1, 2, 3, 4, 5, 6, 7, 8, 9, a, b, c), die das neuronale Netzwerk (300) bilden, emotionale künstliche Neuronen aufweisen, die künstliche Neuronen sind, für die eine aktuelle Emotion des Roboters definiert ist, und
die Emotionsbestimmungseinheit (240) die Intensität einer Emotion in dem Steuersystem (20) basierend auf einem internen Zustand des emotionalen künstlichen Neurons bestimmt.

2. Steuersystem (20) nach dem vorhergehenden Anspruch, wobei
mehrere künstliche Neuronen (1, 2, 3, 4, 5, 6, 7, 8, 9, a, b, c), die das neuronale Netzwerk (300) bilden, endokrine künstliche Neuronen aufweisen, die künstliche Neuronen sind, für die ein Erzeugungszustand endokriner Substanzen des Roboters definiert ist, und
die Emotionsbestimmungseinheit (240) die Intensität einer Emotion im Steuersystem (20) basierend auf einem internen Zustand des endokrinen künstlichen Neurons bestimmt.

3. Steuersystem (20) nach einem der vorhergehenden Ansprüche, wobei
der Sensor (161, 162, 163, 164) einen Bildsensor (161, 162, 163, 164) aufweist, der kontinuierlich Bilder eines fotografischen Subjekts erfasst,
die Aufzeichnungsinformationserzeugungseinheit Formdaten derart erzeugt, dass die Information im ersten Aufzeichnungsformat Formdaten enthält, die eine Form eines Objekts darstellen, dessen Bild durch den Bildsensor (161, 162, 163, 164) aufgenommen wird, und
die Information im zweiten Aufzeichnungsformat Bewegtbilddaten enthält, die eine größere Informationsmenge als diejenige von Formdaten aufweisen und auf einer Ausgabe des Bildsensors (161, 162, 163, 164) basieren.

4. Steuersystem (20) nach dem vorhergehenden Anspruch, ferner mit:
einer zweiten Aufzeichnungsinformationserfassungseinheit, die die Information im zweiten Aufzeichnungsformat erfasst, die durch die Aufzeichnungssteuereinheit (270) aufgezeichnet wird und die Bewegtbilddaten enthält; und
eine Videoerzeugungseinheit (152), die ein Video, das einem Benutzer (30) präsentiert werden soll, basierend auf den Bewegtbilddaten erzeugt, die in der Information im zweiten Aufzeichnungsformat enthalten sind, die durch die zweite Aufzeichnungsinformationserfassungseinheit erfasst wird.

5. Steuersystem (20) nach einem der vorhergehenden Ansprüche, wobei die Aufzeichnungssteuereinheit (270) veranlasst, dass durch die Aufzeichnungsinformationserzeugungseinheit erzeugte Information an einen externen Server (200) übertragen wird, und den Server (200) veranlasst, die Information aufzuzeichnen.

6. Steuersystem (20) nach einem der vorhergehenden Ansprüche, wobei das erste Aufzeichnungsformat ein Format mit hoher Komprimierung und das zweite Aufzeichnungsformat ein Format mit niedriger Komprimierung ist.

7. System (20) mit:
dem Steuersystem (20) nach Anspruch 5; und
dem Server (200).

8. Computerprogramm mit Anweisungen, die, wenn das Programm durch einen Computer ausgeführt wird, den Computer veranlassen, die Schritte auszuführen:
Verarbeiten mindestens eines Teils von Information, die durch einen Sensor (161, 162, 163, 164) eines Roboters kontinuierlich erfasst wird, und Erzeugen von Information in einem ersten Aufzeichnungsformat und von Information in einem zweiten Aufzeichnungsformat, das eine größere Informationsmenge hat als die Information im ersten Aufzeichnungsformat, durch eine Aufzeichnungsinformationserzeugungseinheit;
Veranlassen, dass durch die Aufzeichnungsinformationserzeugungseinheit erzeugte Information aufgezeichnet wird, durch eine Aufzeichnungssteuereinheit (270);
Bestimmen der Intensität einer Emotion des Roboters am Steuersystem (20) basierend auf mindestens einem Teil der Information, die durch den Sensor (161, 162, 163, 164) erfasst wird, durch eine Emotionsbestimmungseinheit (240); und
Umschalten eines Aufzeichnungsformats von Information, deren Aufzeichnung durch die Aufzeichnungssteuereinheit (270) veranlasst wird, vom ersten Aufzeichnungsformat auf das zweite Aufzeichnungsformat in Antwort auf eine Zunahme der durch die Emotionsbestimmungseinheit (240) bestimmten Intensität einer Emotion, wenn die Aufzeichnungsinformationserzeugungseinheit veranlasst wird, die Information im ersten Aufzeichnungsformat zu erzeugen,
wobei die Emotionsbestimmungseinheit (240) die Intensität der Emotion unter Verwendung eines neuronalen Netzwerks (300) basierend auf mindestens einem Teil der durch den Sensor (161, 162, 163, 164) erfassten Information bestimmt,
mehrere künstliche Neuronen (1, 2, 3, 4, 5, 6, 7, 8, 9, a, b, c), die das neuronale Netzwerk (300) bilden, emotionale künstliche Neuronen aufweisen, die künstliche Neuronen sind, für die eine aktuelle Emotion des Roboters definiert ist, und
die Emotionsbestimmungseinheit (240) die Intensität einer Emotion im Steuersystem (20) basierend auf einem internen Zustand des emotionalen künstlichen Neurons bestimmt.

## Revendications

1. Système de commande (20) comprenant :
une unité de génération d'informations d'enregistrement qui traite au moins une partie de l'information détectée en continu par un capteur (161, 162, 163, 164) d'un robot et génère une information dans un premier format d'enregistrement et une information dans un deuxième format d'enregistrement, ayant une quantité supérieure d'informations à celui de l'information du premier format d'enregistrement ;
une unité de commande d'enregistrement (270) qui fait en sorte que l'information générée par l'unité de génération d'information d'enregistrement soit enregistrée ;
une unité de détermination d'émotion (240) qui détermine une intensité d'une émotion du robot au niveau du système de commande (20) sur la base d'au moins une partie de l'information détectée par le capteur (161, 162, 163, 164) ; et
une unité de commande de commutation qui commute un format d'enregistrement d'information, que l'unité de commande d'enregistrement (270) a fait en sorte d'enregistrer à partir du premier format d'enregistrement, vers le deuxième format d'enregistrement en réponse à une augmentation d'une émotion déterminée par l'unité de détermination d'émotion (240) si l'unité de génération d'informations d'enregistrement a provoqué la génération de l'information dans le premier format d'enregistrement, où
l'unité de détermination d'émotion (240) détermine l'intensité de l'émotion en utilisant un réseau neuronal (300) basé au moins en partie sur l'information détectée par le capteur (161, 162, 163, 164),
une pluralité de neurones artificiels (1, 2, 3, 4, 5, 6, 7, 8, 9, a, b, c) constituant le réseau neuronal (300) comporte des neurones artificiels d'émotion, qui sont des neurones artificiels pour lesquels une émotion actuelle du robot est définie, et
l'unité de détermination d'émotion (240) détermine l'intensité d'une émotion dans le système de commande (20) sur la base d'un état interne du neurone artificiel.

2. Système de commande (20) selon la revendication précédentes, dans lequel
une pluralité de neurones artificiels (1, 2, 3, 4, 5, 6, 7, 8, 9, a, b, c) constituant le réseau neuronal (300) comporte des neurones artificiels endocriniens qui sont des neurones artificiels dont l'état de génération de substances endocriniennes du robot est défini, et
une unité de détermination (240) détermine l'intensité d'une émotion dans le système de commande (20) sur la base d'un état interne du neurone artificiel endocrinien.

3. Système de commande (20) selon l'une quelconque des revendications précédentes, dans lequel
le capteur (161, 162, 163, 164) comporte un capteur d'images (161, 162, 163, 164) qui capture des images d'un sujet photographique en continu,
l'unité de génération d'informations d'enregistrement génère des données de forme telles que l'information dans le premier format d'enregistrement comporte des données de forme représentant une forme d'un objet d'une image étant détectée par le capteur d'images (161, 162, 162, 163, 164), et
l'information dans le deuxième format d'enregistrement comporte des données d'images cinématographiques qui ont une plus grande quantité d'informations que les données de forme et est basé sur une sortie du capteur d'images (161, 162, 163, 164).

4. Système de commande (20) selon la revendication précédente, comprenant en outre :
une deuxième unité d'acquisition d'informations d'enregistrement qui acquiert l'information dans le deuxième format d'enregistrement enregistrée par l'unité de commande d'enregistrement (270) et comportant les données d'images cinématographiques ; et
une unité de génération de vidéos (152) qui génère une vidéo devant être présentée à un utilisateur (30) sur la base des données d'images cinématographiques incluses dans l'information dans le deuxième format d'enregistrement acquise par la deuxième unité d'acquisition d'enregistrement.

5. Système de commande (20) selon l'une quelconque des revendications précédentes, dans lequel l'unité de commande d'enregistrement (270) fait en sorte que l'information générée par l'unité de génération d'informations d'enregistrement soit transmise à un serveur extérieur (200) et fait en sorte que le serveur (200) enregistre les informations.

6. Système de commande (20) selon l'une quelconque des revendications précédentes, dans lequel le premier format d'enregistrement est un format de compression élevée et le deuxième format d'enregistrement est un format de faible compression.

7. Système (20) comprenant :
le système de commande (20) selon la revendication 5 ; et
le serveur (200).

8. Produit programme informatique comprenant des instructions qui, lorsque le programme est exécuté par un ordinateur, font en sorte que l'ordinateur effectue les étapes
de traitement d'au moins une partie de l'information détectée en continu par un détecteur (161, 162, 163, 164) d'un robot et de génération de l'information dans un premier format d'enregistrement et de l'information dans un deuxième format d'enregistrement ayant une quantité d'informations plus grande que celui de l'information dans le premier format d'enregistrement par une unité de génération d'informations d'enregistrement ;
de faire en sorte que l'information générée par l'unité de génération d'information d'enregistrement soit enregistrée par une unité de commande d'enregistrement (270) ;
de détermination d'une intensité d'une émotion d'un robot au niveau du système de commande (20) sur la base d'au moins une partie d'une information détectée par le détecteur (161, 162, 163, 164) par une unité de détermination d'émotion (240) ; et
de commutation d'un format d'enregistrement de l'information que l'unité de commande d'enregistrement (270) a fait en sorte d'être enregistré à partir du premier format d'enregistrement dans le deuxième format d'enregistrement en réponse à une augmentation de l'intensité d'une émotion déterminée par l'unité de détermination d'émotion (240) si l'unité de génération d'information d'enregistrement est en train de provoquer la génération de l'information dans le premier format d'enregistrement, où
l'unité de détermination d'émotion (240) détermine l'intensité de l'émotion en utilisant un réseau neuronal (300) sur la base d'au moins une partie de l'information détectée par le capteur (161, 162, 163, 164),
une pluralité de neurones artificiels (1, 2, 3, 4, 5, 6, 7, 8, 9, a, b, c) constituant le réseau neuronal (300) comporte des neurones artificiels d'émotion qui sont des neurones artificiels pour lesquels une émotion actuelle du robot est définie, et
l'unité de détermination d'émotion (240) détermine l'intensité d'une émotion dans le système de commande (20) sur la base d'un état interne du neurone artificiel d'émotion.
